# EUROPEAN PATENT SPECIFICATION

(11) **EP 2 454 946 B1**
(45) Date of publication and mention of the grant of the patent: **04.01.2017**
(21) Application number: 10306288.1
(22) Date of filing: 23.11.2010
(51) Int. Cl.: A23K 50/60, A23K 50/40, A23K 50/80, A23K 50/30, A23K 50/75, A23K 20/147

(54) **METHOD FOR DESALTING ANIMAL TISSUE**
VERFAHREN ZUM ENTSALZEN VON TIERGEWEBE
PROCÉDÉ DE DÉSALINISATION DE TISSU ANIMAL

(43) Date of publication of application: 23.05.2012
(73) Proprietor: Darling Ingredients International Holding B.V., 5681 RH Best (NL)
(72) Inventor: Morskate, Marnix Rogier, 5464 NC, Veghel (NL)
(74) Representative: Algemeen Octrooi- en Merkenbureau B.V.

(56) References cited:
- WO-A1-2004/000035
- US-A- 5 233 033
- US-A- 5 607 840
- TERRÉ, M., ET AL.: "Hydrolysed proteins from animal origin can replace dried skim milk from milk replacer formula", JOURNAL OF ANIMAL SCIENCE, vol. 87, no. E. suppl. 2, 2009, pages 452-453, XP002626896, USNEW YORK, NY ISSN: 0021-8812
- CORASSA, A., ET AL.: "Hidrolisado de mucosa intestinal de suínos em substituçao ao plasma sangüíneo em dietas para leitões de 21 a 49 dias.", REVISTA BRASILEIRA DE ZOOTECNIA - BRAZILIAN JOURNAL OF ANIMAL SCIENCE, vol. 36, no. 6, 2007, pages 2029-2036, XP002626897, SOCIEDADE BRASILEIRA DE ZOOTECNIA ISSN: 1516-3598

## Description

The present invention relates to a method for desalting tissue originating from animals. In particular, the present invention provides a method for desalting mucosa tissue, notably mucosa tissue originating from bovine or porcine.

The invention also provides a method for preparing an animal feed supplement or additive enriched in nutritional elements readily available to the animal, in particular to the young animal, for example young piglets, chickens, calves or aqua species. The invention also provides a low-salt content or a salt-free animal feed supplement and a feeding or growing method using the same.

As an example, in the producing pork industry, an important economic factor is the time required to raise pigs following weaning to a marketable weight. The process of weaning, especially early weaning (generally between 10 and 25 days of age, in particular 18 or 21 days), produces challenges that the young pigs have not previously experienced. These challenges include, among other things, an abrupt change in diet, usually from sow's milk to grain-based feeds. During the post-weaning period, pigs typically have a limited opportunity to digest anything but sow's milk before being abruptly introduced to feed other than sow's milk, such as grain-based feeds. Besides being unfamiliar with the new feed, the young pigs must also adapt to a new social structure where the pigs are not solely reliant on their sows for nourishment. When these two circumstances occur simultaneously, nutritional intake by the young pigs is typically disrupted, which may reduce the growth rate of the young pigs and also may increase the mortality rate of the young, post-weaned pigs.

The scientific article of Terre, M., et al.: "Hydrolysed proteins from animal origin can replace dried skim milk from milk replacer formula", JOURNAL OF ANIMAL SCIENCE, vol. 87, no. E. suppl. 2, 2009, pages 452-453, discloses that Palbiocalves RD and Palbiocalves SD are two products obtained from the enzymatic hydrolysis of porcine intestinal mucosa. This article states that it is possible to replace part of dried skim milk for milk replacers formula hydrolyzed protein without impairing calf growth and calf starter intake.

The scientific article of Corassa, A., et al.: "Hidrolisado de mucosa intestinal de suinos em substituçao ao plasma sanguineo em dietas para leitoes de 21 a 49 dias.", REVISTA BRASILEIRA DE ZOOTECNIA - BRAZILIAN JOURNAL OF ANIMAL SCIENCE, vol. 36, no. 6, 2007, pages 2029-2036, discloses the hydrolyzed of intestinal mucosa of swine in substitution to blood plasma in diets of pigs from 21 to 49 days. According to this article a trial was conducted to evaluate the effect of partial or total substitution of blood plasma for hydrolyzed of intestinal mucosa of swine in diets of pigs from 21 to 49 days of age.

WO2004/000035 relates to an animal feed comprising a mucosa byproduct; wherein the mucosa byproduct includes at least about 10 wt. % nucleic acid material; at least about 20 wt. % mucopolysaccharides; and no more than about 10 wt. % proteinaceous material. The mucosa byproduct is produced by a process which includes: digesting animal mucosal material to form a mucosal digest; and separating the mucosal digest to provide (a) a protein-enriched stream and (b) a polyanionic-enriched stream, which includes mucopolysaccharides and nucleic acid material.

US 5,607,840 relates to a method for the preparation of protein hydrolysate for use in providing nutrition from mammalian mucosa tissue, comprising the steps of: providing an aqueous mixture comprising the mammalian mucosa tissue: hydrolyzing the mucosa tissue in said aqueous mixture with a proteolytic enzyme at a salt concentration of less than 0.1 molar thereby forming a digest solution comprising said protein hydrolysate and polyanions, said polyanions comprising heparin, said salt concentration being conducive for separation of said polyanions comprising heparin from said protein hydrolysate by adsorption of said polyanions comprising heparin with an anion exchange resin; adding a sufficient amount of said anion exchange resin to said digest solution to adsorb said polyanions comprising heparin from said digest solution onto said anion exchange resin; recovering said anion exchange resin and said adsorbed polyanions comprising heparin from said digest solution, a sufficient amount of said polyanions comprising heparin being adsorbed onto said resin and removed from said digest solution; and recovering the protein hydrolysate from the digest solution by at least one of screening and dehydration.

US 5,233,033 relates to a method for producing sialic acid, comprising the steps of: hydrolyzing a delipidated egg yolk with acid, such as HCl or H2SO4, desalting the hydrolyzate; and then purifying the desalted hydrolyzate by treatment with ion exchange resin. Sialic acid is a generic term for the acyl derivatives of neuraminic acid, and has been found to act as a virus receptor and mediate various physiological actions.

A number of feed additives have been employed as feed supplements for young pigs.

For example in US-6783777, there is described a method consisting in providing to post-weaned piglets a feed coated with a liquid digest that is prepared by enzymatically processing a nutritional component and then applying the resulting liquid digest onto a feed substance to form the swine feed.

The coated feed is supposed to increase the apparent palatability of the feed allowing an increased daily feed intake by the pigs and an increased average daily gain by young post-weaned piglets. The coated feed is prepared from components like proteinaceous materials, fatty materials, carbohydrate-containing materials or any combination thereof. However, in the liquid digest used to coat the animal feed remains important amounts of ashes, mainly constituted by salts or solid and crystalline substances, in amounts from 2.5 to 9% at least. The presence of these ashes in the liquid digest certainly prevents the use of large amounts of such in coating the animal feed ; the liquid digest amount is preferably limited to 3% of the coated animal feed. In addition, high contents of such ash or salt in the animal feed can lead to diarrhoea, notably in piglets.

Another approach in feed additive for young pigs includes a protein hydrolysate that is derived from processing of animal tissue, for example from porcine mucosa and intestinal portions. High salt content in feed additive originating from processed animal tissue limits its application, in particular limits its application dosage.

Even if the existing means appear to provide some results, there still remains a need to provide improved animal feed supplement or additive enriched in nutritional elements readily available to the animal, notably to the young animal. In particular, it remains an important need to provide animal feed supplement or additive enriched in nutritional elements readily available to the animal that is substantially free of salt or largely improved in reduced salt content.

Indeed, due to high salt content mucosa tissue that has been enzymatically processed results in a protein hydrolysate that can be mixed only at limited concentrations in the final feedstock provided to the animal.

However with the continuous development of the mucosa based products in the animal feed industry, the high ash content, that is believed to be almost exclusively caused by salts, limits the value and interest in this source of proteins required by growing animals.

Some attempts to reduce the salt content have used some ultra- or nano-filtration techniques. These techniques are not considered as satisfactory for various reasons, including a lack of selectivity or even an unsatisfactory separation rate leading to an overall limited yield resulting to up to 80% of the protein containing product being lost with the separated salts.

Precipitation with calcium chloride has also been used in order to transform the salts in a precipitate. This technique also lacks some selectivity and efficiency.
The use of ion-exchange resins to separate the salts from the protein containing products has also been experienced with a final yield that is low since a major part of the proteins or amino-acids were adsorbed by the resin hence resulting in product loss.

The economical profile of these techniques, notably compared with the overall recovery rate, does not appear to be satisfactory.
In addition, the high salt content mucosa tissue tends to form lumps resulting in operational problems during processing of the material hence impacting the final efficiency of the existing techniques.

From JP-60-133854 is known a method for producing seasoning that includes a desalting step based on using electro-dialysis technique. This method uses finely crushed muscle, head, bone, shell of fresh or frozen animal, fish, shellfish or crustacean as raw materials wherein 5-30% metal salt is added to control deterioration of food due to microorganisms. Further to liquefaction and decomposition of proteins carried out by self digestive enzymes of the raw materials, enzymes produced by microorganisms such as aerobic bacteria and yeast or by enzymes that are added according to need, sterilization and deactivation of enzyme is carried out by heating at 95-110°C. The salt and metal are then removed by electro-dialysis using an ion-exchange membrane in order to yield a seasoning. However, this document does not address the production of animal feed supplement or additive.

From US-6051687 is known a method for removing sulphite or sulphate from a liquid protein hydrolysate by chemical treatment leading to precipitation followed by removing of the precipitated sulphite and sulphate. However, this precipitation technique does not prove to be suitable nor efficient for a large variety of salts other than sulphite and sulphate. In addition, this method requires previous removing of fatty components from the starting liquid protein hydrolysate by acid treatment and separation. A second step consists in precipitating sulphite and sulphate by adding calcium anions and removing the precipitate. In addition to the precipitation of sulphite and sulphate, all or part of the protein content precipitates simultaneously thus reducing the amount of protein that is recovered. Efficiency and selectivity of methods based on precipitation thus appears to be problematic.

In WO-2004/00035, there is disclosed an animal feed comprising mucosa by-products. This document does not address desalting such by-products by electro-dialysis.

The method disclosed in US-5607840 does not refer either to the implementation of electro-dialysis in desalting mucosa by-products. The method disclosed in this patent does not allow important or substantial removing of preservative salts from the final animal feed.

The purpose of the present invention is thus to provide a method for desalting animal tissue, in particular mucosa tissue originating from bovine or porcine. The method according to the invention allows substantially desalting mucosa tissue that has been enzymatically processed or hydrolyzed.
The invention also provides an animal feed supplement or additive in the form of a composition that is enriched in nutritional elements readily available to the animal and that is substantially free of salt or largely improved in reduced salt content.

The invention also provides a method for feeding fish or animal, in particular young animals notably piglets, with an improved animal feed supplement or additive.

The invention thus allows to partially or totally solve the problems of the prior art. The methods and composition according to the present invention thus provide a solution to the outstanding need that will enhance the economic viability of meat producers, in particular of pork producers.

The method according to the invention allows the preparation of a supplement or additive that is compliant with current regulation, in particular with EU regulation 808/2003 whereby the resulting hydrolyzed product has a molecular weight that is far below 10,000 Dalton. This renders it easier to digest by the fed animals but more important renders it safe with regard to the PrP-sc prion associated with TSE/BSE diseases.

The present invention thus provides a method for the preparation of an animal feed or pet food as recited in present claim 1.

According to the invention, the porcine mucosa protein hydrolysate normally consists in protein hydrolysate of porcine mucosa, pig protein hydrolysate, hydrolyzed porcine protein, hydrolyzed porcine mucosa protein or hydrolyzed mucosa proteins of porcine origin.

According to the present invention, the starting protein hydrolysate is generally prepared by methods known in the art. Such a protein hydrolysate is a common by-product of the extraction of the blood anti-coagulate heparin from porcine hash gut or intestinal mucosa. An aqueous solution comprising the mucosa from the livestock waste or by-products is usually chemically, either by acid or alkaline treatment, or enzymatically hydrolyzed, by protease for example. The heparin is then extracted from the hydrolyzed mucosa by techniques known in the art, such as selective sorption using an ionic exchange resin.

For example, in a slaughterhouse the mucosal tissue of intestines is separated from the outer lining, the mucosa tissue is recovered and usually salted, notably with sodium chloride, in order to prevent protein decay and with sodium meta-bisulphite for preservation purposes ; sodium meta-bisulphite being known to yield sulphite and sulphate. Sorption efficiency is also generally improved. At this stage, the mucosa can be processed in order to separate heparin that is resulting from an enzymatic treatment of mucosa. The mucosa tissue is thus first hydrolyzed then heparin is extracted. The mucosa tissue also containing proteins is decomposed under the action of protease enzymes thereby releasing heparin from the protein matrix. After extraction of heparin from the digested mucosa, the resulting mixture after hydrolysis merely consists of protein components of lower molecular weights. Typically, such a mixture usually comprises proteins in residual or reduced amounts and principally peptides, notably poly-peptides, oligo-peptides and di- or tri-peptides, and free amino acids that have a lower size, lower molecular size or molecular weight.

The relative protein amounts in each components of the hydrolysate can vary widely. An example of such a mixture can be 10% of polypeptides, 10% of oligo-peptides, 40% of di- and tri-peptides and 40% of free amino acids. In this case, 80% of the components have a size equal or less than 3 peptides. This renders it ideal to be digested by the animals, in particular weaning animals.

The enzymatically-processed mucosa can be centrifuged in order to separate the fatty components and other components that can have a negative impact on the downstream process, and then filtered in order to separate its protein components depending on their respective molecular weights. A typical separation according to the present invention allows recovering the hydrolyzed proteins or parts thereof having a molecular weight of less than 10,000 Dalton. The parts having a molecular weight of more than 10,000 Dalton can be further enzymatically-processed or processed in standard rendering plants. The filtration step can consist in an ultra-filtration, notably an ultra-filtration on a 10kD membrane.

The addition of conservative salts to mucosa tissue at the slaughterhouse is finally concentrated up to 220-fold further to the enzymatic processing and purification steps. The resulting protein hydrolysate thus requires to be desalted by electro-dialysis according to the method according to the invention.

According to the method of the invention, the starting material is possibly concentrated before the electro-dialysis step. The concentration before electro-dialysis normally amounts up to a maximum of 20% of dry matter. Further concentration before drying with air is preferred from an energy efficiency point of view since air drying is energy consuming. Drying the mucosa tissue hydrolysate in order to reduce its water content by 50% is advantageous.

Further to the desalting step, a major part of the water or moisture content of the resulting product can be eliminated by evaporation, drying or both.

For the method according to the invention, the salts that are eliminated can be selected in the list consisting of conservation salts and notably sodium, potassium, sulphite and sulphate salts, for example sodium chloride, sodium meta-bisulphite that is a broadly used preservative salt.

According to the invention, the salt content can be reduced by 50%, preferably by 80% or even by substantially 100%.

Electro-dialysis (ED) is a known technique that is used to transport salt ions from one solution through ion-exchange membranes to another solution under the influence of an applied electric potential difference. This is normally realised in an electro-dialysis cell. The cell usually consists of a feed or diluate compartment and a concentrate or brine compartment formed by an anion exchange membrane and a cation exchange membrane placed between two electrodes. In almost all practical electro-dialysis processes, multiple electro-dialysis cells are arranged into a configuration called an electro-dialysis stack, with alternating anion and cation exchange membranes forming the multiple electro-dialysis cells. The overall result of the electro-dialysis process is an ion concentration increase in the concentrate stream with a depletion of ions in the diluate solution feed stream due to the combined action of the current action and the alternate anion and cation exchange membranes.

For the method according to the invention, the electro-dialysis technique is carried out in order to separate salts from the mucosa tissue hydrolysate. Electro-dialysis requires that a solution is conducting electricity. Within the method according to the invention, this is rendered possible due to the presence of the salts that possess a very high electric conductivity.

For the method according to the invention, the electro-dialysis parameters can be selected by the person skilled in the art, in particular the current density, the cell voltage, the current efficiency, the diluate and concentrate concentrations.

The maximum voltage can vary widely in particular from 0.8 to 2 V/cell; the minimum conductivity that can be considered is around 0.5 mS/cm; the temperature can also vary, for example between 10 and 50°C, preferably below 40°C; pH can also be adapted by any treatment available to the person skilled in the art, for example to optimise or prevent amino-acid losses.

The size of the cells can also vary widely, for example with an effective cell size of from 0.1 m² to 500m².

According to the invention, the electro-dialysis step can be operated in a continuous production process or in a batch production process.
The invention thus provides an animal feed supplement originating from enzymatically processed mucosa tissue, or mucosa tissue protein hydrolysate, and having a low salt content. It is prepared by the desalting method according to the invention.

The animal feed supplement according to the invention generally comprises protein components originating from porcine mucosa tissue that has been enzymatically processed or hydrolyzed.

The animal feed supplement according to the invention has a low salt content or is free of salt, notably of salts selected in the list consisting of conservation salts and notably sodium, potassium, sulphite and sulphate salts, for example sodium chloride, sodium meta-bisulphite.

According to the invention, the low content or the free salt content of the animal feed supplement means that the feed supplement according to the invention has a salt content that is significantly reduced or that the feed supplement is substantially free of any salt compared to the feed supplements known in the art. The animal feed supplement according to the invention can thus present an improved palatability to the animal and it can improve the feed intake of the animal as well as reduce the diarrhoea. It can additionally be administered in much higher dosage levels.

According to the invention, the animal feed supplement has a salt content below 30%, preferably below 25%, even preferably below 20% or 15% or even 10% or below.
In particular, the animal feed supplement according to the invention consists in a protein hydrolysate resulting from electro-dialysis desalting of a porcine mucosa and having a salt content below 30%, preferably below 25%, even preferably below 20% or 15% or even 10% or below. Advantageously, the animal feed supplement according to the invention consists in a protein hydrolysate resulting from electro-dialysis desalting of a porcine mucosa and being free of salt.

Within the animal feed supplement according to the invention, the respective content in protein components can vary in a large manner. Preferably, the animal feed supplement according to the invention generally comprises 60%, more preferably 80%, of its protein components having a size equal or less than 3 peptides. An example of a particular animal feed supplement according to the invention comprises protein components being 10% of polypeptides, 10% of oligo-peptides, 40% of di- and tri-peptides and 40% of free amino acids. Variations of these respective contents in protein components provides equivalent or similar alternatives of the animal feed supplement according to the invention. Advantageously, the protein components of the animal feed supplement according to the invention have generally a molecular weight below 10,000 Dalton. The average size of the protein components is generally ranging from 100 to 4,000 Dalton, preferably from 200 to 1,000 Dalton, for example the average size can be 700 Dalton.

With low dry matter, the feed supplement according to the invention can be in the form of a powder that can be very fine.

The desalinated animal feed supplement according to the invention is generally stored in plastic-lined paper bags, for example at 20 to 25 kg filling degree, depending on bulk density.

The invention also provides a feeding or growing method comprising feeding animals with the animal feed supplement according to the invention. In particular, the invention provides a feeding or growing method comprising feeding animals with an animal feed supplement consisting in a protein hydrolysate resulting from electro-dialysis desalting of a porcine mucosa and having a salt content below 30%, preferably below 25%, even preferably below 20% or 15% or even 10% or below, or that is free of salt. In case the feed supplement is free of salt, it can advantageously be used in a 100% dosage for feeding animals.

Except otherwise indicated for the present invention, the salt content referred to according to this invention relies on the protein hydrolysate according to the invention, the salt that might be present in the final feed or diet administered to the animal thus has another origin.

Even if the animal feed supplement according to the invention is particularly adapted for feeding a large number of animals like bovines, pork, goats, sheep, poultry, fish, dogs and pet animals ; it is preferably used in growing pork, notably weaning piglets and lactating sows.

For example, the present invention provides a method for growing
- weaning piglets, notably after 3-4 weeks of age, comprising feeding the animal with a diet including 2-3% of animal feed supplement according to the invention ; or
- lactating sows, notably to improve feed intake, comprising feeding the animal with a diet including 1-2% of animal feed supplement according to the invention ; or
- poultry, notably broilers and turkeys, comprising feeding the animal with a diet including 2-3% of animal feed supplement according to the invention ; or
- fish, notably salmon, trout and shrimp, comprising feeding the animal with a diet including 2-3% of animal feed supplement according to the invention ; or
- calf comprising feeding the animal with a diet including 2-3% of animal feed supplement according to the invention as a milk replacement; or
- dogs or pet animals, notably animals necessitating hypo-allergenic diets or novel proteins, comprising feeding the animal with a diet including 1-2% of animal feed supplement according to the invention.

The following examples provide some illustrations of particular aspects of the invention. These examples also provides results and experimental data evidencing the efficiency of the invention compared to the prior art technologies.

### Example 1

A solution of mucosa of porcine origin has been used in a electro-dialysis (ED) trial. Prior to ED trial, the mucosa has been centrifuged to remove the larger quantity of fat, and subsequent membrane filtration using ultrafiltration (UF) membranes with a cut-off of 10,000 Dalton (10 kDa). The UF permeate (with a recovery of 66% of the feed) was used as feed inlet of the ED unit. The permeate was cooled down to 40°C as maximum inlet temperature for the ED unit.

For the ED trial the number of membranes is 41 corresponding to 20 cell pairs. The membrane area is 20x50 cm as useful surface and spacers made of polypropylene (PP) are used. The packing is made of polyvinylchloride (PVC) and the capacity of each liquid flow is 15 dm³/min with 2.2 meters of water column. The following settings were applied (40 V, 30 Ampere initial current). Over time samples of diluate were taken (see table 1) and were analysed on composition.

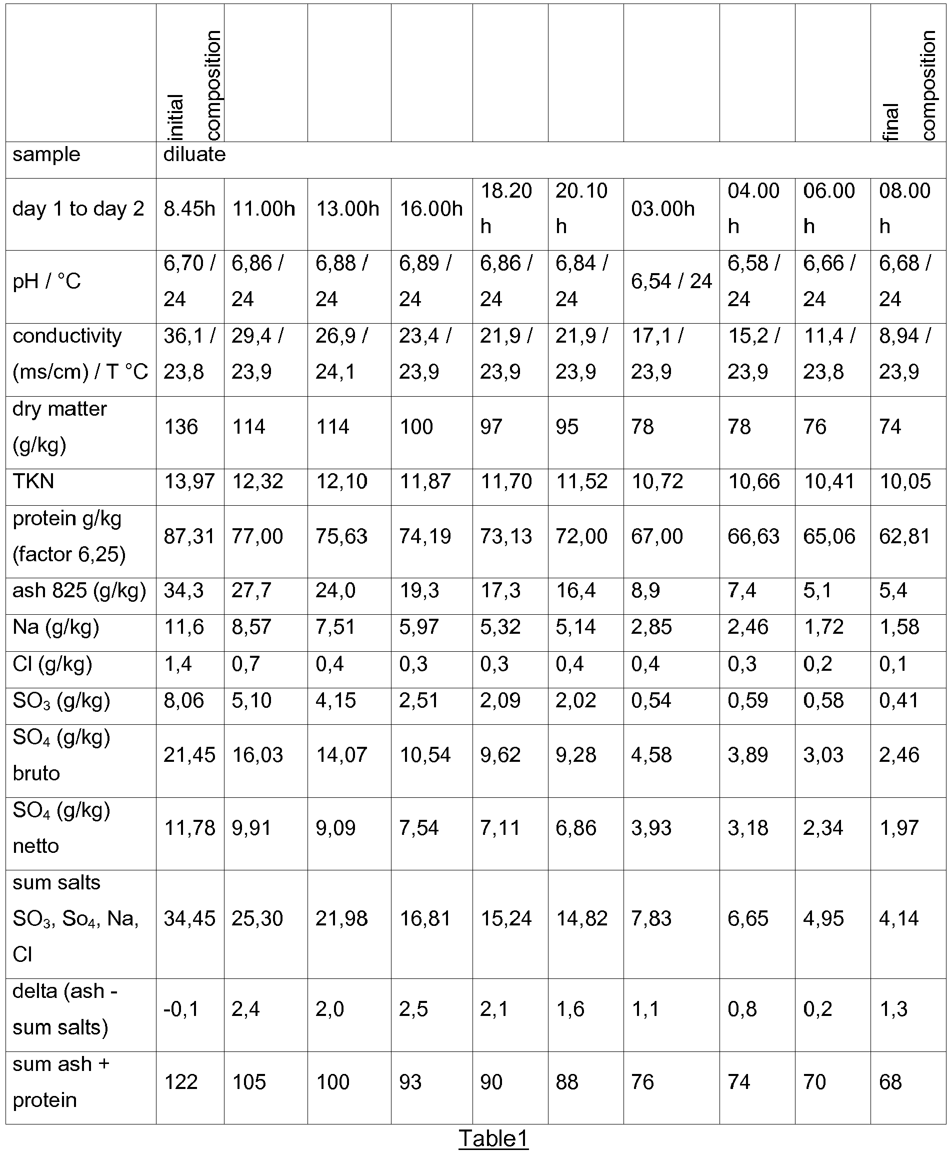

In table 2, the results are presented further to recalculation with respect to the dry product consisting in 100% dry matter.

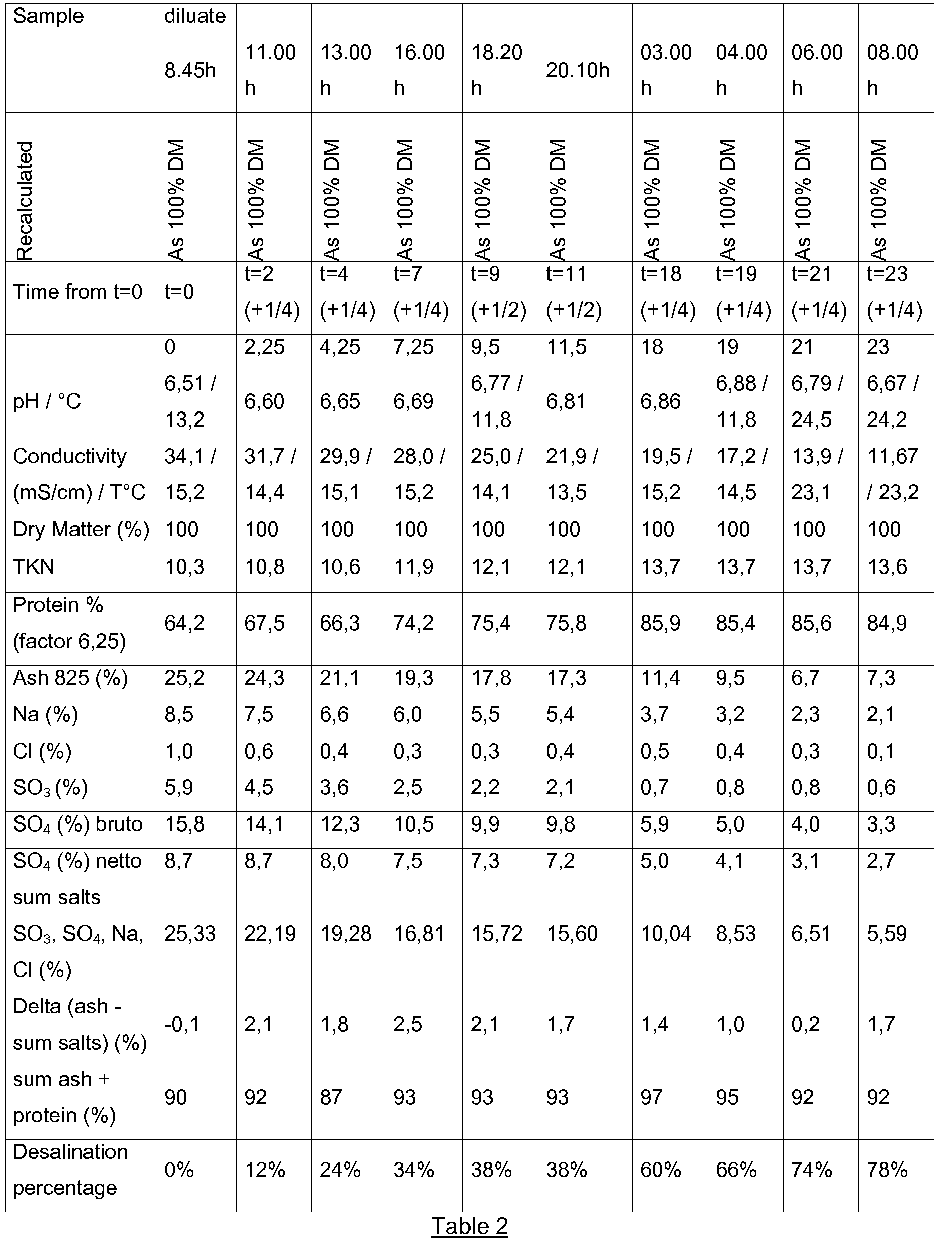

Conductivity of the mucosa solution *versus* time is presented in table 2.

Over time the protein content increases to values above 85%, from initial value of about 63%. Ash content steadily drops from almost 26% to less than 6%.

### Example 2

A further experiment has been worked in similar manner as for example 1. The results with respect to the content of the diluate further to analysis *versus* time are presented in table 3.

**Table 3**

| sample | diluate | | | | | | | | | | |
|---|---|---|---|---|---|---|---|---|---|---|---|
| day 1- day 2 | 11.00 h | 12.00 h | 14.00 h | 17.00 h | 18.00 h | 19.00 h | 20.00 h | 21.00 h | 22.00 h | 23.00 h | 00.15 h |
| Description | t=0 | t=1 | t=3 | t=6 | t=7 | t=8 | t=9 | t=10 | t=11 | t=12 | t=13 |
| pH / °C | 6,51 / 13,2 | 6,60 | 6,69 | 6,86 | 6,88 / 11,8 | 6,79 / 24,5 | 6,67 / 24,2 | 6,54 / 25,2 | 6,43 | 6,00 | 5,63 |
| Conductivity (mS/cm) / °C | 34,1 / 15,2 | 31,7 / 14,4 | 28,0 / 15,2 | 19,5 / 15,2 | 17,2 / 14,5 | 13,9 / 23,1 | 11,67 / 23,2 | 9,92 / 23,6 | 9,11 / 23,5 | 7,31 / 22,3 | 6,25 / 21,2 |
| Dry Matter (g/kg) | 127 | 124 | 119 | 107 | 104 | 99 | 96 | 93 | 92 | 88 | 87 |
| TKN | 13,58 | 13,48 | 13,34 | 12,85 | 12,66 | 12,44 | 12,25 | 12,00 | 11,92 | 11,65 | 11,53 |
| Protein g/kg (factor 6,25) | 84,88 | 84,25 | 83,38 | 80,31 | 79,13 | 77,75 | 76,56 | 75,00 | 74,50 | 72,81 | 72,06 |
| Ash 825 (g/kg) | 30,2 | 29,2 | 25,9 | 17,6 | 15,4 | 12,4 | 9,9 | 7,8 | 4,4 | 4,7 | 4,1 |
| Na (g/kg) | 10,6 | 9,62 | 8,45 | 5,67 | 5,04 | 3,99 | 3,24 | 2,61 | 2,31 | 1,74 | 1,38 |
| Cl (g/kg) | 1,5 | 1,2 | 0,1 | 0,0 | 0,0 | 0,0 | 0,1 | 0,0 | 0,0 | 0,0 | 0,0 |
| SO₃ (g/kg) | 7,6 | 6,49 | 5,50 | 2,64 | 2,00 | 1,33 | 0,95 | 0,79 | 0,70 | 0,52 | 0,44 |
| SO₄ (g/kg) bruto | 22,25 9 | 19,11 | 16,20 | 10,49 | 9,90 | 7,13 | 5,38 | 3,36 | 2,96 | 2,06 | 1,92 |
| SO₄ (g/kg) netto | 13,14 2 | 11,33 | 9,60 | 7,33 | 7,50 | 5,53 | 4,24 | 2,42 | 2,21 | 1,44 | 1,40 |
| sum salts SO₃, SO₄, Na, Cl | 34,36 | 29,93 | 24,75 | 16,16 | 14,94 | 11,12 | 8,72 | 5,97 | 5,27 | 3,80 | 3,30 |
| Delta (ash - sum salts) | -4,2 | -0,7 | 1,1 | 1,4 | 0,5 | 1,3 | 1,2 | 1,8 | -0,9 | 0,9 | 0,8 |
| sum ash + protein | 119 | 113 | 109 | 98 | 95 | 90 | 86 | 83 | 79 | 78 | 76 |

### Example 3

A further experiment has been worked in similar manner as for example 1. The results with respect to the content of the diluate further to analysis *versus* time are presented in table 4. The results have been generated by working the process according to the invention on a lab scale test with commercial test equipment.

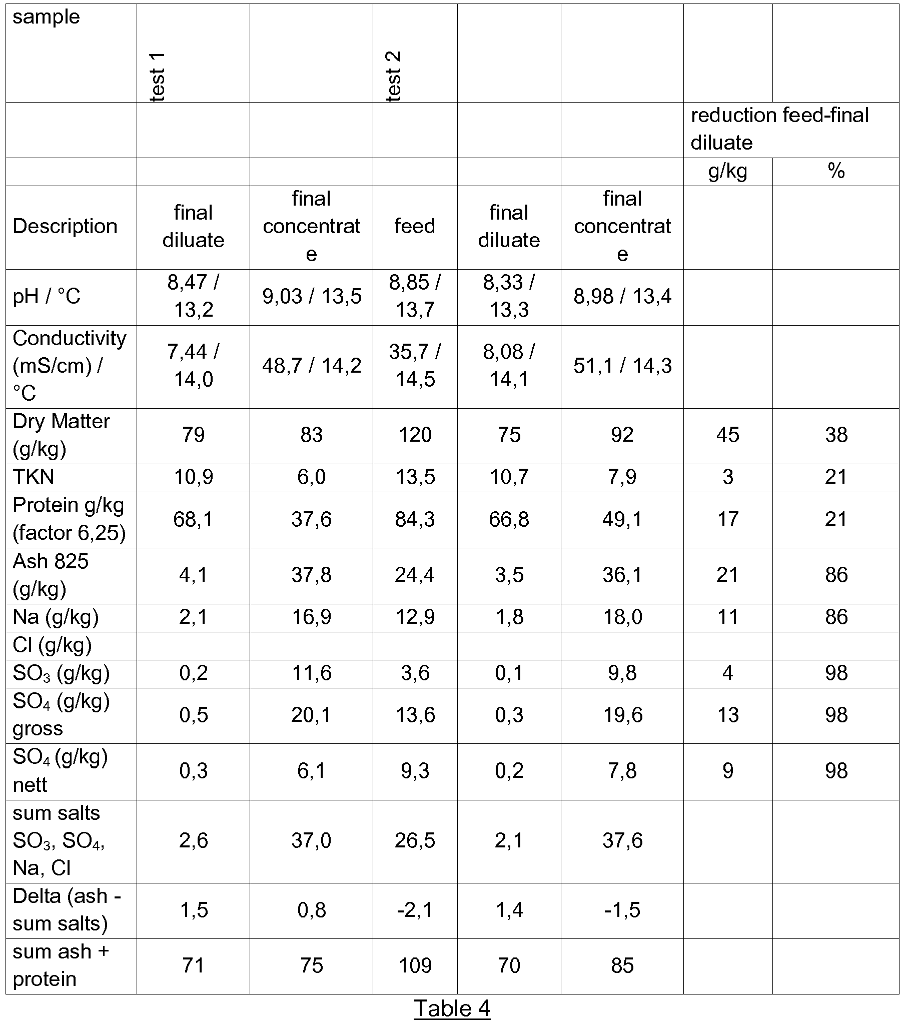

**Table 5**

| | final diluate | final concentrate | feed | final diluate | final concentrate |
|---|---|---|---|---|---|
| Recalculated | As 100% D.S. | As 100% D.S. | As 100% D.S. | As 100% D.S. | As 100% D.S. |
| Conductivity (mS/cm)/°C | 7,44 / 14,0 | 48,7 / 14,2 | 35,7 / 14,5 | 8,08 / 14,1 | 51,1 / 14,3 |
| Dry Matter (%) | 100 | 100 | 100 | 100 | 100 |
| TKN | 13,8 | 7,2 | 11,2 | 14,3 | 8,5 |
| Protein % (factor 6,25) | 86,2 | 45,3 | 70,2 | 89,1 | 53,4 |
| at 825°C (%) | 5,2 | 45,5 | 20,3 | 4,7 | 39,2 |
| Na (%) | 2,7 | 20,4 | 10,8 | 2,4 | 19,6 |
| Cl (%) | 0,0 | 0,0 | 0,0 | 0,0 | 0,0 |
| SO₃ (%) | 0,2 | 14,0 | 3,0 | 0,1 | 10,7 |
| SO₄ (g/kg) gross | 0,6 | 24,2 | 11,3 | 0,4 | 21,3 |
| SO₄ (g/kg) nett | 0,3 | 7,4 | 7,7 | 0,3 | 8,5 |
| sum salts SO₃, SO₄, Na, Cl (%) | 3,3 | 44,6 | 22,1 | 2,8 | 40,9 |
| Delta (ash - sum salts) (%) | 1,9 | 1,0 | -1,7 | 1,9 | -1,6 |
| sum ash + protein (%) | 89,5 | 90,8 | 90,5 | 93,8 | 92,6 |
| Desalination percentage | 87% | -68% | | 89% | -54% |

### Example 4

A further experiment has been worked in similar manner as for example 1. The voltage, current characteristics of the industrial scale pilot with electro-dialysis are presented in table 6. Conductivity of both diluate and concentrate are monitored over time and presented in table 7. A decrease in diluate conductivity has been observed as well as an increase in concentrate conductivity.

**Table 6**

| Industial Pilot Test | | Batch 1 | | | | | | | |
|---|---|---|---|---|---|---|---|---|---|
| Volume 110L- 10% dry matter inlet concentration | | | | | | | | | |
| | | Diluate | | | | Concentrate | | | Electrolyte |
| Time | Voltage (V) | Current (Amp.) | Conductivity (mS/cm) | Qᵥ (Itr/hr) | T (°C) | Conductivity (mS/cm) | Qᵥ (Itr/hr) | T (°C) | Qᵥ (Itr/hr) |
| 9:00 | 35 | 20 | 26,7 | 900 | 33 | 21,8 | 1000 | 38 | 750 |
| 9:20 | 35 | 24 | 25,2 | 900 | 33 | 28,8 | 1000 | 38 | 750 |
| 10:00 | 35 | 24 | 22,5 | 900 | 33 | 35,5 | 1000 | 38 | 750 |
| 10:15 | 35 | 23,8 | 21,6 | 1000 | 33 | 37,6 | 1000 | 38 | 750 |
| 10:50 | 35 | 21 | 17,6 | 1000 | 33 | 40,8 | 1000 | 38 | 710 |
| 11:30 | 35 | 18 | 14,9 | 1000 | 33 | 42,4 | 1000 | 38 | 710 |
| 12:30 | 35 | 12 | 10,5 | 1000 | 33 | 43,7 | 1000 | 38 | 710 |
| 13:15 | 35 | 9 | 8,4 | 1000 | 33 | 44,1 | 1000 | 38 | 710 |
| 13:45 | 35 | 7,4 | 7,3 | 1000 | 33 | 44,2 | 1000 | 38 | 710 |

**Table 7**

| volume 200L | | 20% dry matter at inlet ED unit | | | | | | | | |
|---|---|---|---|---|---|---|---|---|---|---|
| | | | | Diluate | | | Concentrate | | | Electrolyte |
| Time | Voltage (V) | | Current (Amp.) | Conductivity (mS/cm) | Qv (Itr/hr) | T (°C) | Conductivity (mS/cm) | Qv (Itr/hr) | T (°C) | Qv (Itr/hr) |
| D1 18:00 | 35 | | 17 | 54,9 | 900 | 37 | 33,8 | 1000 | 40 | 750 |
| 18:05 | 35 | | 22 | 45,7 | 900 | 37 | 42,4 | 1000 | 40 | 750 |
| 18:15 | 35 | | 25 | 41,3 | 900 | 37 | 55,2 | 1000 | 40 | 750 |
| 22:00 | 35 | | 25 | 36,7 | 1000 | 37 | 42,4 | 1000 | 40 | 750 |
| D2 8:15 | 35 | | 18 | 19 | 1000 | 37 | 44,6 | 1000 | 40 | 680 |
| 11:45 | 35 | | 10 | 13,9 | 1000 | 37 | 52 | 1000 | 40 | 680 |
| 12:40 | 35 | | 9,2 | 12,7 | 1000 | 37 | 52,8 | 1000 | 40 | 680 |
| 12:55 | 35 | | 9 | 12,8 | 1000 | 37 | 52,9 | 1000 | 40 | 680 |

In table 8, feed inlet corresponds to the untreated mucosa and diluates 1 and 3 are examples of desalted mucosa compositions. It can be clearly seen that the protein/dry matter content increases to values over 80%. Ash content is reduced from almost 30% in the dry matter to less than 10% in the dry matter. Also clear reduction of salt-ions has been observed (chlorine, sodium, sulphite and sulphate).

**Table 8**

| sample | feed inlet | diluate batch 1 | diluate batch 3 |
|---|---|---|---|
| | day 1 | day 14 | day 16 |
| pH / °C | 6,76 / 17,3 | 6,42 / 17,2 | 6,51 / 17,3 |
| Conductivity (mS/cm) / °C | 28,0 / 17,8 | 6,5 / 17,9 | 19,0 / 17,8 |
| Dry matter (g/kg) | 90 | 47 | 171 |
| TKN | 8,9 | 6,2 | 22,9 |
| protein g/kg (factor 6,25) | 55,6 | 39,0 | 143,3 |
| Protein / dry matter | 62% | 83% | 84% |
| ash 825°C (g/kg) | 25,8 | 5,0 | 11,7 |
| ash 825°C/dry matter (%) | 28,7% | 10,6% | 6,8% |
| ash 550°C (g/kg) | 26,4 | 3,9 | 12,8 |
| ash 550°C/Dry matter (%) | 29,3% | 8,3% | 7,5% |
| Na (g/kg) | 9,1 | 1,5 | 4,5 |
| Cl (g/kg) | 1,1 | 0,1 | 0,3 |
| SO₃ (g/kg) | 2,9 | 0,2 | 0,4 |
| SO₄ (g/kg) bruto | 16,3 | 2,3 | 6,3 |
| SO₄ (g/kg) netto | 12,8 | 2,1 | 5,8 |
| sum salts SO₃, SO₄, Na, Cl | 25,9 | 3,9 | 11,0 |
| ash-sum other salts | 0,5 | 0,0 | 1,8 |
| sum ash 550 + protein | 82 | 43 | 156 |
| sum ash 825 + protein | 81 | 44 | 155 |

### Example 5

A further experiment has been worked starting from an aminoacid composition analysis before and further to electro-dialysis. Results obtained from pilot plant scale tests are presented in table 9.

A known commercial product (Palbio) has been used as e reference. Proglobulin a protein derived from blood plasma and known to be used for similar feed application has been used as a further reference.

**Table 9**

| | 80% desalted ED trial | Existing Mucosa | Palbio | 80% desalted ED trial | Existing Mucosa | Palbio | Proglobulin 80P |
|---|---|---|---|---|---|---|---|
| aminoacids: | | | | | | | |
| Cysteïne (g/kg) | 5,5 | 7,5 | 6,1 | 0,7% | 1,4% | 1,1% | 3,6% |
| Hydroxy-proline (g/kg) | 5,2 | <0.5 | 9,7 | 0,7% | | 1,7% | 0,0% |
| Methionine (g/kg) | 11,4 | 11,5 | 11,8 | 1,5% | 2,1% | 2,1% | 0,7% |
| Asparagine (g/kg) | 52,0 | 53,3 | 49,4 | 7,0% | 9,6% | 8,8% | 9,1% |
| Threonine (g/kg) | 40,1 | 26,5 | 25,0 | 5,4% | 4,8% | 4,5% | 5,4% |
| Serine (g/kg) | 33,5 | 27,3 | 24,8 | 4,5% | 4,9% | 4,4% | 5,2% |
| Glutamic acid (g/kg) | 81,4 | 82,9 | 75,3 | 11,0% | 14,9% | 13,5% | 13,2% |
| Proline (g/kg) | 51,0 | 34,0 | 35,4 | 6,9% | 6,1% | 6,3% | 5,5% |
| Glycine (g/kg) | 53,1 | 37,6 | 55,7 | 7,2% | 6,7% | 10,0% | 3,3% |
| Alanine (g/kg) | 55,1 | 37,6 | 34,1 | 7,4% | 6,7% | 6,1% | 5,1% |
| Valine (g/kg) | 52,3 | 35,2 | 30,4 | 7,1% | 6,3% | 5,4% | 6,3% |
| Iso-Leucine (g/kg) | 35,2 | 25,0 | 23,3 | 4,7% | 4,5% | 4,2% | 3,4% |
| Leucine (g/kg) | 64,6 | 46,1 | 43,4 | 8,7% | 8,3% | 7,8% | 9,1% |
| Tyrosine (g/kg) | 34,4 | 18,9 | 19,7 | 4,6% | 3,4% | 3,5% | 6,1% |
| Phenylalanine (g/kg) | 36,0 | 23,6 | 21,4 | 4,9% | 4,2% | 3,8% | 5,4% |
| Histidine (g/kg) | 20,6 | 10,9 | 12,1 | 2,8% | 2,0% | 2,2% | 3,1% |
| Lysine (g/kg) | 64,5 | 46,9 | 47,3 | 8,7% | 8,4% | 8,5% | 8,5% |
| Arginine (g/kg) | 38,5 | 25,8 | 31,2 | 5,2% | 4,6% | 5,6% | 5,5% |
| Tryptophan (g/kg) | 6,5 | 6,6 | 3,5 | 0,9% | 1,2% | 0,6% | 1,5% |
| free amino acids | 740 | 557 | 559 | 100% | 100% | 100% | 100% |

## Claims

1. A method for the preparation of an animal feed or pet food supplement, on basis of mucosa tissue originating from bovine or porcine, **characterized in that** the method comprises the following steps:
i) enzymatically processing or hydrolysing mucosa tissue,
ii) recovering hydrolysed proteins or parts thereof having a molecular weight equal or less than 10kDa
iii) desalting of said porcine or bovine mucosa protein hydrolysate obtained after step ii) by electro-dialysis.

2. A method according to claim 1, wherein the hydrolysate comprises proteins in residual or reduced amounts selected in the group consisting of poly-peptides, oligo-peptides and di- or tri-peptides, and free amino acids

3. A method according to claims 1 to 2, wherein the hydrolysate comprises 10% of polypeptides, 10% of oligo-peptides, 40% of di- and tri-peptides and 40% of free amino acids.

4. A method according to claims 1 to 3, wherein the salts that are eliminated are selected in the list consisting of sodium, potassium, sulphite and sulphate salts, sodium chloride, sodium meta-bisulphite.

5. A method according to claims 1 to 4, wherein the salt content is reduced by 50%.

6. An animal feed supplement originating from porcine mucosa tissue that has been obtained according to a method according to any one of claims 1-5 and having a salt content below 30%.

7. An animal feed supplement according to claim 6 having a salt content below 10%.

8. An animal feed supplement according to claims 6 and 7 having a reduced conservative salt content in salts selected in the list consisting of sodium, potassium, sulphite and sulphate salts, sodium chloride, sodium meta-bisulphite.

9. An animal feed supplement according to claims 6 to 8 comprising protein components that are 10% of polypeptides, 10% of oligo-peptides, 40% of di- and tri-peptides and 40% of free amino acids.

10. An animal feed supplement according to claims 6 to 9, wherein the protein components have a molecular weight below 10,000 Dalton.

11. An animal feed supplement according to claims 6 to 10, wherein the protein components have an average size ranging from 200 to 1,000 Dalton.

12. A feeding or growing method comprising feeding an animal with an animal feed supplement according to claims 6 to 11.

13. A method for growing
- weaning piglets, after 3-4 weeks of age, comprising feeding the animal with a diet including 2-3% of animal feed supplement; or
- lactating sows to improve feed intake, comprising feeding the animal with a diet including 1-2% of animal feed supplement; or
- poultry, broilers and turkeys, comprising feeding the animal with a diet including 2-3% of animal feed supplement; or
- fish, salmon, trout and shrimp, comprising feeding the animal with a diet including 2-3% of animal feed supplement; or
- calf, comprising feeding the animal with a diet including 2-3% of animal feed supplement as a milk replacement; or
- dogs or pet animals and animals necessitating hypo-allergenic diets or novel proteins, comprising feeding the animal with a diet including 1-2% of animal feed supplement; wherein the feed supplement is a feed supplement according to claims 6 to 12.

## Patentansprüche

1. Verfahren zur Herstellung eines Tierfutterergänzungsmittel oder Haustiernahrungsergänzungsmittel auf der Basis von Mukosagewebe, das vom Rind oder vom Schwein stammt, **dadurch gekennzeichnet, dass** das Verfahren folgende Schritte umfasst:
i) enzymatisches Verarbeiten oder Hydrolysieren von Mukosagewebe,
ii) Auffangen von hydrolysierten Proteinen oder Teilen davon, die eine Molekülmasse von 10kDa oder weniger haben,
iii) Entsalzen des nach Schritt ii) erhaltenen Schweine- oder Rindmukosaproteinhydrolysats durch Elektrodialyse.

2. Verfahren nach Anspruch 1, wobei das Hydrolysat Proteine in Restmengen oder verringerten Mengen umfasst, die aus der aus Polypeptiden, Oligopeptiden und Di- oder Tripeptiden und freien Aminosäuren bestehenden Gruppe ausgewählt sind.

3. Verfahren nach den Ansprüchen 1 bis 2, wobei das Hydrolysat 10 % Polypeptide, 10 % Oligopeptide, 40 % Di- und Tripeptide und 40 % freie Aminosäuren umfasst.

4. Verfahren nach den Ansprüchen 1 bis 3, wobei die eliminierten Salze aus der Liste ausgewählt sind, die aus Natrium, Kalium, Sulfit- und Sulfatsalzen, Natriumchlorid, Natriummetabisulfit besteht.

5. Verfahren nach den Ansprüchen 1 bis 4, wobei der Salzgehalt um 50 % reduziert wird.

6. Tierfutterergänzungsmittel, das von Schweinemukosagewebe stammt, das gemäß einem Verfahren nach einem der Ansprüche 1 bis 5 erhalten wurde und einen Salzgehalt von weniger als 30 % hat.

7. Tierfutterergänzungsmittel nach Anspruch 6 mit einem Salzgehalt von weniger als 10 %.

8. Tierfutterergänzungsmittel nach den Ansprüchen 6 und 7, mit einem verringerten konservativen Salzgehalt an Salzen, die aus der Liste ausgewählt sind, die aus Natrium, Kalium, Sulfit- und Sulfatsalzen, Natriumchlorid, Natriummetabisulfit besteht.

9. Tierfutterergänzungsmittel nach den Ansprüchen 6 bis 8, das Proteinbestandteilen umfasst, die 10 % Polypeptide, 10 % Oligopeptide, 40 % Di- und Tripeptide und 40 % freie Aminosäuren sind.

10. Tierfutterergänzungsmittel nach den Ansprüchen 6 bis 9, wobei die Proteinbestandteile eine Molekülmasse von weniger als 10.000 Dalton haben.

11. Tierfutterergänzungsmittel nach den Ansprüchen 6 bis 10, wobei die Proteinbestandteile eine durchschnittliche Größe von 200 bis 1000 Dalton haben.

12. Verfahren zum Füttern oder Aufziehen, welches das Füttern eines Tieres mit einem Tierfutterergänzungsmittel nach den Ansprüchen 6 bis 11 umfasst.

13. Verfahren zum Aufziehen
- von Absetzferkeln nach einem Alter von 3 bis 4 Wochen, welches das Füttern des Tieres mit einer Nahrung umfasst, die 2 bis 3 % eines Tierfutterergänzungsmittels enthält, oder
- von laktierenden Sauen zur Verbesserung der Nahrungsaufnahme, welches das Füttern des Tieres mit einer Nahrung umfasst, die 1 bis 2 % eines Tierfutterergänzungsmittels enthält, oder
- von Geflügel, Masthühnern und Truthähnen, welches das Füttern des Tieres mit einer Nahrung umfasst, die 2 bis 3 % eines Tierfutterergänzungsmittels enthält, oder
- von Fisch, Lachs, Forellen und Garnelen, welches das Füttern des Tieres mit einer Nahrung umfasst, die 2 bis 3 % eines Tierfutterergänzungsmittels enthält, oder
- von Kälbern, welches das Füttern des Tieres mit einer Nahrung umfasst, die 2 bis 3 % eines Tierfutterergänzungsmittels als Milchersatz enthält, oder
- von Hunden oder Haustieren und Tieren, die hypoallergene Nahrung oder neuartige Proteine benötigen, welches das Füttern des Tieres mit einer Nahrung umfasst, die 1 bis 2 % eines Tierfutterergänzungsmittels enthält, wobei das Futterergänzungsmittel ein Futterergänzungsmittel nach den Ansprüchen 6 bis 12 ist.

## Revendications

1. Procédé pour la préparation d'un complément alimentaire pour animaux ou pour animaux de compagnie, sur la base d'un tissu de muqueuse d'origine bovine ou porcine, **caractérisé en ce que** le procédé comprend les étapes suivantes :
i) de traitement ou d'hydrolyse enzymatique du tissu de muqueuse,
ii) de récupération de protéines hydrolysées ou de parties de celles-ci ayant un poids moléculaire inférieur ou égal à 10 kDa
iii) de dessalage dudit hydrolysat de protéines de muqueuse porcine ou bovine obtenu après l'étape ii) par électrodialyse.

2. Procédé selon la revendication 1, dans lequel l'hydrolysat comprend des protéines en quantités résiduelles ou réduites choisies dans le groupe constitué de polypeptides, d'oligopeptides et de dipeptides ou de tri-peptides, et d'acides aminés libres.

3. Procédé selon les revendications 1 à 2, dans lequel l'hydrolysat comprend 10% de polypeptides, 10% d'oligopeptides, 40% de dipeptides et de tri-peptides et 40% d'acides aminés libres.

4. Procédé selon les revendications 1 à 3, dans lequel les sels qui sont éliminés sont choisis dans la liste constituée de sels de sodium, de potassium, de sulfite et de sulfate, de chlorure de sodium, de métabisulfite de sodium.

5. Procédé selon les revendications 1 à 4, dans lequel la teneur en sel est réduite de 50%.

6. Complément alimentaire pour animaux provenant de tissu de muqueuse porcine qui a été obtenu selon un procédé selon l'une quelconque des revendications 1 à 5 et ayant une teneur en sel inférieure à 30%.

7. Complément alimentaire pour animaux selon la revendication 6 ayant une teneur en sel inférieure à 10%.

8. Complément alimentaire pour animaux selon les revendications 6 et 7 ayant une teneur réduite en sel conservateur dans des sels choisis dans la liste constituée de sels de sodium, de potassium, de sulfite et de sulfate, de chlorure de sodium, de métabisulfite de sodium.

9. Complément alimentaire pour animaux selon les revendications 6 à 8 comprenant des composants protéiques qui sont 10% de polypeptides, 10% d'oligopeptides, 40% de dipeptides et de tri-peptides et 40% d'acides aminés libres.

10. Complément alimentaire pour animaux selon les revendications 6 à 9, dans lequel les composants protéiques ont un poids moléculaire inférieur à 10000 Dalton.

11. Complément alimentaire pour animaux selon les revendications 6 à 10, dans lequel les composants protéiques ont une taille moyenne comprise entre 200 et 1000 Dalton.

12. Procédé d'alimentation ou d'élevage comprenant l'alimentation d'un animal avec un complément alimentaire pour animaux selon les revendications 6 à 11.

13. Procédé d'élevage
- de porcelets sevrés, après l'âge de 3 à 4 semaines, comprenant l'alimentation de l'animal avec un régime alimentaire comportant de 2 à 3% de complément alimentaire pour animaux ; ou
- de truies en lactation pour améliorer la ration alimentaire, comprenant l'alimentation de l'animal avec un régime alimentaire comportant de 1 à 2% de complément alimentaire pour animaux ; ou
- de volailles, de poulets et de dindes, comprenant l'alimentation de l'animal avec un régime alimentaire comportant de 2 à 3% de complément alimentaire pour animaux ; ou
- de poissons, de saumon, de truites et de crevettes, comprenant l'alimentation de l'animal avec un régime alimentaire comportant de 2 à 3% de complément alimentaire pour animaux ; ou
- de veaux, comprenant l'alimentation de l'animal avec un régime alimentaire comportant de 2 à 3% de complément alimentaire pour animaux en tant que substitut de lait ; ou
- de chiens ou d'animaux de compagnie et d'animaux nécessitant des régimes alimentaires hypoallergéniques ou de nouvelles protéines, comprenant l'alimentation de l'animal avec un régime alimentaire comportant de 1 à 2% de complément alimentaire pour animaux ; où le complément alimentaire est un complément alimentaire selon les revendications 6 à 12.
